# FASCICULE DE BREVET EUROPEEN

(11) **EP 1 087 193 B1**
(45) Date de publication et mention de la délivrance du brevet: **21.07.2004**
(21) Numéro de dépôt: 00402428.7
(22) Date de dépôt: 04.09.2000
(51) Int. Cl.: F25D 3/10, F25D 31/00, A01N 1/02

(54) **Conteneur cryogénique à réserve d'azote liquide et utilisation pour le stockage de produits biologiques**
Tiefkühlbehälter mit Flüssigstickstoffvorrat und Nutzung zur Lagerung biologischer Produkte
Cryogenic container with liquid nitrogen supply and utilisation for storing biological products

(30) Priorité: 22.09.1999 FR 9911830
(43) Date de publication de la demande: 28.03.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Klok, Cornélis, 94370 Noiseau (FR)
(74) Mandataire: Le Moenner, Gabriel

(56) Documents cités:
- EP-A- 0 648 986
- WO-A-90/15293
- WO-A-98/34078
- DE-C- 19 622 245
- US-A- 3 195 620
- US-A- 5 154 007
- US-A- 5 168 725

## Description

La présente invention concerne les conteneurs cryogéniques à réserve d'azote liquide pour le stockage de produits, typiquement de produits biologiques, du type comprenant, dans une enveloppe, un réceptacle central définissant un volume intérieur accessible par le haut et destiné à recevoir les produits. Un conteneur de ce type est décrit dans le document EP-A-648 996.

Jusqu'à récemment la conservation des produits dans ce type de conteneur était assurée par un volume d'azote liquide, suffisant pour assurer le maintien en froid dans le conteneur, remplissant le fond du réceptacle central et dans lequel une partie des produits entreposés sont immergés.

Cette conservation en phase partiellement liquide s'est révélée présenter des risques de contamination croisée des produits par des agents infectieux non détruits par le froid. Pour y remédier, il a été proposé de supprimer l'immersion d'une partie des produits dans l'azote liquide contenu dans le réceptacle en faisant reposer les produits sur un faux plancher rapporté sur le fond du réceptacle, le volume d'azote liquide ne dépassant pas ce faux plancher. Cette approche représente toutefois l'inconvénient d'imposer une modification en hauteur du récipient pour conserver la même hauteur du volume du stockage au-dessus du faux plancher et du volume d'azote, ce qui diminue l'ergonomie et la facilité d'accès du conteneur. De plus, pour limiter cette hauteur, le volume d'azote liquide est relativement faible, ce qui a pour conséquence une difficulté accrue de régulation du niveau d'azote pour assurer un maintien en froid ainsi qu'une marge de sécurité plus faible en cas de défaillance du système de maintien de niveau de l'azote liquide.

La présente invention a pour objet de remédier à ces divers problèmes en proposant un conteneur cryogénique selon la revendication 1.

Selon d'autres caractéristiques plus particulières de l'invention :
- une super isolation sous vide est aménagée dans le deuxième volume ;
- le conteneur comprend un orifice supérieur d'accès au réceptacle obturable, de préférence hermétiquement, par un bouchon en matériau isolant.

L'invention concerne également l'utilisation de tels conteneurs, pour le stockage en phase gazeuse de produits biologiques.

D'autres avantages de l'invention ressortiront de la description suivante de modes de réalisation, donnés à titre illustratif mais nullement limitatif, sur lesquels :

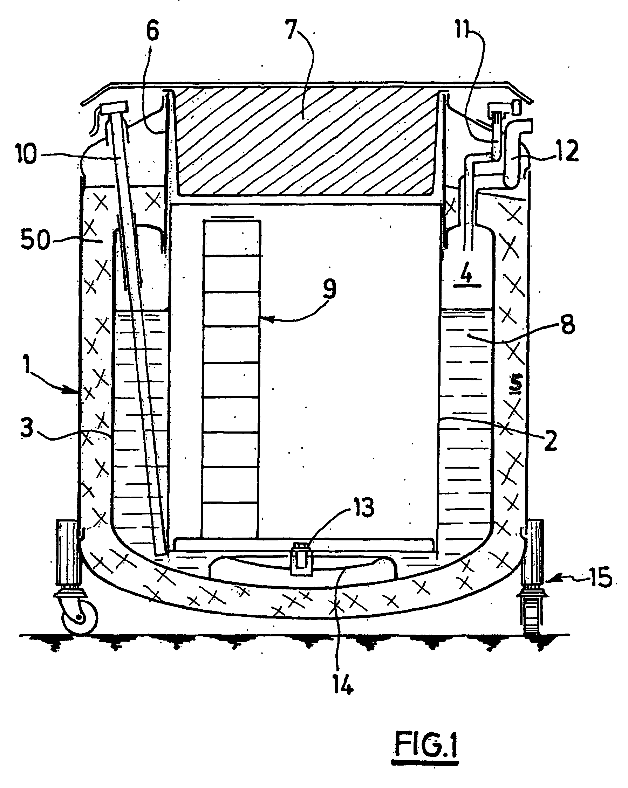

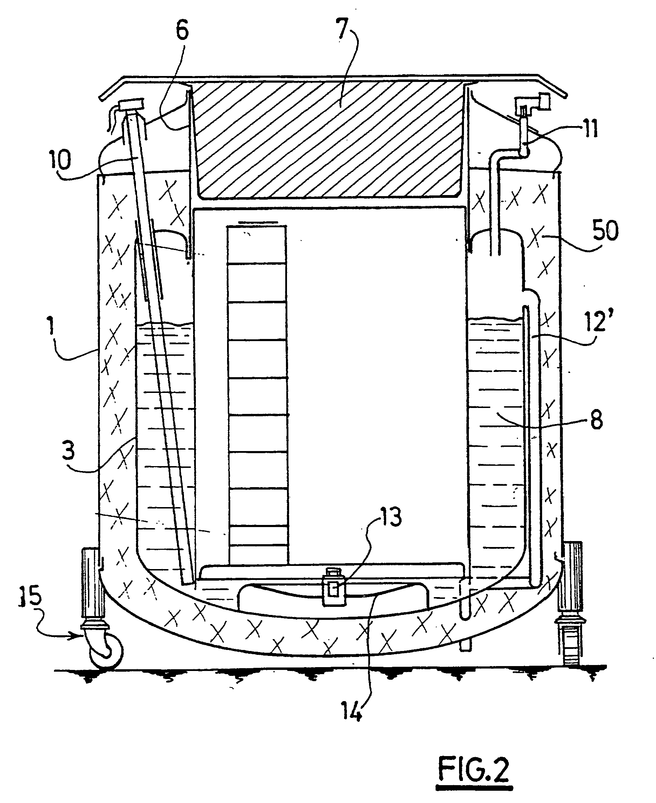

les figures 1 et 2 sont deux vues en coupe longitudinale de deux modes de réalisation d'un conteneur cryogénique selon l'invention.

Dans la description qui va suivre et sur les dessins, les éléments identiques ou analogues portent les mêmes chiffres de référence, éventuellement indicés.

Sur les figures 1 et 2, on a représenté un conteneur cryogénique selon l'invention comprenant principalement une enveloppe externe autoporteuse 1, un réceptacle intérieur métallique 2 partiellement disposé dans un réceptacle intermédiaire 3, également métallique, définissant, avec les parois latérale et inférieure du réceptacle central 2, un premier volume fermé 4 et, avec l'enveloppe 1, un deuxième volume fermé 5 entourant complètement le premier volume fermé. Typiquement, les réceptacles 2 et 3 et l'enveloppe 1 sont cylindriques et concentriques. Une virole supérieure 6, dans le prolongement du réceptacle 2, raccorde entre elles les extrémités supérieures de l'enveloppe 1 et du réceptacle 3 et forme une ouverture d'accès au volume intérieur du réceptacle 2 de même diamètre que ce dernier et obturable par un bouchon amovible en matériau isolant 7. Avantageusement, le volume intérieur du réceptacle 2 ne comportant plus aucun liquide vaporisable, nécessitant un passage de dégazage, le bouchon 7 peut fermer de façon hermétique le conteneur, en limitant ainsi grandement les pertes thermiques et garantissant une tenue en froid améliorée.

Selon un aspect de l'invention, le volume 4 forme une chambre, essentiellement annulaire, pour une réserve d'azote liquide 8 assurant un chemisage avec une hauteur d'azote liquide importante du réceptacle 2 garantissant une température basse sensiblement homogène dans le volume intérieur de ces derniers pour une bonne conservation des produits 9 disposés dans des poches, des canisters ou encore, comme représenté, dans des paniers à tiroirs superposés. Le volume 5 forme également une chambre essentiellement annulaire, enclosant complètement le réceptacle 3 et pourvue, de façon classique, d'une super-isolation sous vide 50.

Selon d'autres aspects de l'invention, une jauge ou canne de contrôle de niveau 10, de type capacitif, s'étend sur toute la hauteur du volume 4 en traversant la paroi supérieure de l'enveloppe 1, et une circuiterie de remplissage 11 traverse la partie supérieure de l'enveloppe externe 1 et l'extrémité supérieure du réceptacle intermédiaire 3 pour déverser l'azote liquide dans le volume 4. Le conteneur est complété par une conduite de dégazage 12, disposée en partie haute, comme la circuiterie de remplissage 11, en entourant partiellement cette dernière, dans le mode de réalisation de la figure 1, ou assurant à la fois le rôle de trop-plein avec une canalisation 12' s'étendant vers le bas et traversant le fond de l'enveloppe 1, dans le mode de réalisation de la figure 2.

Comme représenté schématiquement sur les dessins, le réceptacle 2 est avantageusement en outre supporté en prenant appui, via un pion central 13 sur une structure support 14 solidaire du fond du réceptacle intermédiaire 3. Dans une variante (non représentée), l'ouverture d'accès au réceptacle 2 étant totale, on peut aménager, dans le réceptacle 2, un bac tournant de réception de produits, comme décrit dans le document EP-A-648 986 au nom de la Demanderesse.

Dans le conteneur qui vient d'être décrit, l'enveloppe 1 et les réceptacles 2 et 3 assemblés les uns aux autres typiquement par soudage sont avantageusement réalisés en acier inoxydable, le bouchon 7 étant réalisé en une mousse polyuréthane moulé avec une peau renforcée en fibre de verre. Comme représenté, l'enveloppe 1 est avantageusement pourvue de roulettes de support et de déplacement 15 fixées à la périphérie de sa base.

Quoique l'invention ait été décrite en relation avec des modes de réalisation particuliers, elle ne s'en trouve pas limitée mais est susceptible de modifications et de variantes qui apparaîtront à l'homme de l'art dans le cadre des revendications ci-après.

## Revendications

1. Conteneur cryogénique à réserve d'azote liquide pour le stockage de produits, comprenant, dans une enveloppe (1), un réceptacle central métallique (2) définissant un volume intérieur accessible par une ouverture d'accès supérieure et destiné à recevoir des produits (9), **caractérisé en ce que** le réceptacle central est disposé dans un réceptacle intermédiaire (3) définissant, avec le réceptacle central (2), un premier volume fermé (4) destiné à recevoir l'azote liquide (8) et, avec l'enveloppe (1), un deuxième volume fermé (5), et **en ce qu'**il comprend une circuiterie (11) de remplissage d'azote liquide débouchant dans la partie haute du premier volume fermé (4) et traversant l'enveloppe (1).

2. Conteneur selon la revendication 1, **caractérisé en ce qu'**il comporte un conduit de dégazage (12 ; 12') débouchant dans la partie supérieure du premier volume fermé (4) et traversant l'enveloppe (1).

3. Conteneur selon l'une des revendications précédentes, **caractérisé en ce qu'**il comporte une jauge de niveau d'azote liquide (10) plongeant dans le premier volume fermé (4).

4. Conteneur selon l'une des revendications précédentes, **caractérisé en ce que** l'ouverture d'accès (6) est obturable par un bouchon (7) en matériau isolant.

5. Conteneur selon l'une des revendications précédentes, **caractérisé en ce qu'**il comporte une super-isolation sous vide (50) aménagée dans le deuxième volume (5).

6. Conteneur selon l'une des revendications précédentes, **caractérisé en ce que** les réceptacles central (2) et intermédiaire (3) sont concentriques.

7. Conteneur selon la revendication 6, **caractérisé en ce que** les réceptacles central (2) et intermédiaire (3) sont assemblés par soudage.

8. Utilisation d'un conteneur selon l'une des revendications précédentes pour le stockage en phase gazeuse de produits biologiques.

## Patentansprüche

1. Tiefkühlbehälter mit Flüssigstickstoffvorrat zum Lagern von Produkten, der in einem Mantel (1) eine zentrale Aufnahme (2) aus Metall umfasst, die ein Innenvolumen abgrenzt, das durch eine obere Zugangsöffnung zugänglich und dazu bestimmt ist, Produkte (9) aufzunehmen, **dadurch gekennzeichnet, dass** die zentrale Aufnahme in einer Zwischenaufnahme (3) angeordnet ist, die mit der zentralen Aufnahme (2) ein erstes geschlossenes Volumen (4) festlegt, das dazu bestimmt ist, Flüssigstickstoff (8) aufzunehmen, und mit dem Mantel (1) ein zweites geschlossenes Volumen (5), und dadurch, dass er eine Leitungsanlage (11) zum Einfüllen von Flüssigstickstoff umfasst, die in den oberen Teil des ersten geschlossenen Volumens (4) mündet und den Mantel (1) durchquert.

2. Behälter nach Anspruch 1, **dadurch gekennzeichnet, dass** er eine Entgasungsleitung (12; 12') umfasst, die in den oberen Teil des ersten geschlossenen Volumens (4) mündet und den Mantel (1) durchquert.

3. Behälter nach einem der vorhergehenden Ansprüche, **dadurch gekennzeichnet, dass** er ein Eichmaß (10) des Füllstands des Flüssigstickstoffs umfasst, das in das erste geschlossene Volumen (4) eintaucht.

4. Behälter nach einem der vorhergehenden Ansprüche, **dadurch gekennzeichnet, dass** die Zugangsöffnung (6) durch einen Stopfen (7) aus isolierendem Werkstoff verschlossen werden kann.

5. Behälter nach einem der vorhergehenden Ansprüche, **dadurch gekennzeichnet, dass** er eine Superisolierung unter Vakuum (50) umfasst, die im zweiten Volumen (5) eingerichtet ist.

6. Behälter nach einem der vorhergehenden Ansprüche, **dadurch gekennzeichnet, dass** die zentrale Aufnahme (2) und die Zwischenaufnahme (3) konzentrisch sind.

7. Behälter nach Anspruch 6, **dadurch gekennzeichnet, dass** die zentrale Aufnahme (2) und die Zwischenaufnahme (3) durch Schweißen zusammengefügt sind.

8. Verwendung eines Behälters nach einem der vorhergehenden Ansprüche zum Lagern biologischer Produkte in gasförmiger Phase.

## Claims

1. Cryogenic container having a reserve of liquid nitrogen for storing products, comprising, in an outer shell (1), a metal central receptacle (2) defining an internal volume accessible via an upper access opening and intended to receive products (9), **characterized in that** the central receptacle is placed in an intermediate receptacle (3) defining, with the central receptacle (2), a first closed volume (4) intended to received the liquid nitrogen (8) and, with the outer shell (1), a second closed volume (5), and **in that** it comprises circuitry (11) for filling with liquid nitrogen, emerging in the top part of the first closed volume (4) and passing through the outer shell (1).

2. Container according to Claim 1, **characterized in that** it includes a venting pipe (12; 12') emerging in the upper part of the first closed volume (4) and passing through the outer shell (1).

3. Container according to either of the preceding claims, **characterized in that** it includes a liquid nitrogen level gauge (10) immersed in the first closed volume (4).

4. Container according to one of the preceding claims, **characterized in that** the access opening (6) can be closed off by a stopper (7) made of insulating material.

5. Container according to one of the preceding claims, **characterized in that** it includes a vacuum superinsulation (50) provided in the second volume (5).

6. Container according to one of the preceding claims, **characterized in that** the central receptacle (2) and the intermediate receptacle (3) are concentric.

7. Container according to Claim 6, **characterized in that** the central receptacle (2) and the intermediate receptacle (3) are joined together by welding.

8. Use of a container according to one of the preceding claims for the gas-phase storage of biological products.
